# EUROPEAN PATENT SPECIFICATION

(11) **EP 3 045 277 B1**
(45) Date of publication and mention of the grant of the patent: **14.02.2018**
(21) Application number: 15201779.4
(22) Date of filing: 21.12.2015
(51) Int. Cl.: B27B 5/29, B23D 45/04

(54) **MITER SAW WITH MITER ANGLE LOCK**
GEHRUNGSSÄGE MIT GEHRUNGSWINKELSPERRE
SCIE À ONGLET AVEC ARRÊT D'ANGLE D'ONGLET

(30) Priority: 14.01.2015 US 201514596614
(43) Date of publication of application: 20.07.2016
(73) Proprietor: Techtronic Power Tools Technology Limited, Road Town, Tortola (VG)
(72) Inventor: Dutterer, David, Belton, SC South Carolina 29697 (US); Hart, Michael, Anderson, SC South Carolina 29621 (US)
(74) Representative: Kenrick, Mark Lloyd

(56) References cited:
- EP-A2- 1 894 686
- CN-A- 103 586 532
- CN-Y- 201 405 121
- US-A1- 2009 205 474
- US-A1- 2011 232 449

## Description

### FIELD OF THE INVENTION

The present invention relates to a miter saw according to the preamble of claim 1.

### BACKGROUND OF THE INVENTION

Miter saws are generally used for miter cutting workpieces made of wood, metals and plastics. In order to make miter and bevel cuts on a workpiece, the saw blade of the miter saw must be angularly adjusted to a desired miter angle relative to the base and the workpiece in order to make the desired cut. Once the saw blade has been adjusted to the desired miter angle, it is advantageous to lock the saw blade in position in order to make consistent, repeatable cuts.

CN103586532 discloses a miter saw according to the preamble of claim 1. According to the abstract of this document, the miter saw at least comprises a base and a workbench, wherein the base and the workbench are connected coaxially and rotationally. The miter saw further comprises a rotating positioning mechanism and a locking mechanism, the rotating position between the base and the workbench is locked through the rotating positioning mechanism, the base and the workbench are locked to each other through the locking mechanism, and the workbench and the rotating positioning mechanism are connected with the base from the upper side and the lower side of the base respectively. According to the miter saw, the rotating position between the base and the workbench is locked through the rotating positioning mechanism, the base and the workbench are locked to each other through the locking mechanism, both the rotating positioning mechanism and the locking mechanism are fixedly connected with the workbench, and thus the whole miter saw is more reasonable in structure and higher in practicality and can be locked just through single-hand operation.

### SUMMARY OF THE INVENTION

The present invention provides, in one aspect, a miter saw as defined by the features of claim 1. Further preferred embodiments are defined by the features of claims 2-12.

Other features and aspects of the invention will become apparent by consideration of the following detailed description and accompanying drawings.

### BRIEF DESCRIPTION OF THE DRAWINGS

FIG. 1 is a front perspective view of a miter saw in accordance with an embodiment of the invention.
FIG. 2 is an exploded perspective view of a miter angle lock of the miter saw of FIG. 1.
FIG. 3 is a cross-sectional view of a portion of the miter saw of FIG. 1 along section 3-3, illustrating the miter angle lock in a locked configuration.
FIG. 4 is a cross-sectional view of the same portion of the miter saw shown in FIG. 3, illustrating the miter angle lock in an unlocked configuration.
FIG. 5 is a front perspective view of a miter saw in accordance with another embodiment of the invention.
FIG. 6 is an exploded perspective view of a miter angle lock of the miter saw of FIG. 5.
FIG. 7 is a cross-sectional view of a portion of the miter saw of FIG. 5 along section 7-7, illustrating the miter angle lock in a locked configuration.
FIG. 8 is a cross-sectional view of the same portion of the miter saw shown in FIG. 3, illustrating the miter angle lock in an unlocked configuration.
FIG. 9 is a front perspective view of a miter saw in accordance with an example not according to the invention.
FIG. 10 is an exploded perspective view of a miter angle lock of the miter saw of FIG. 9.
FIG. 11 is a cross-sectional view of a portion of the miter saw of FIG. 9 along section 11-11, illustrating the miter angle lock in a locked configuration.
FIG. 12 is a cross-sectional view of the same portion of the miter saw shown in FIG. 11, illustrating the miter angle lock in an unlocked configuration.

### DETAILED DESCRIPTION

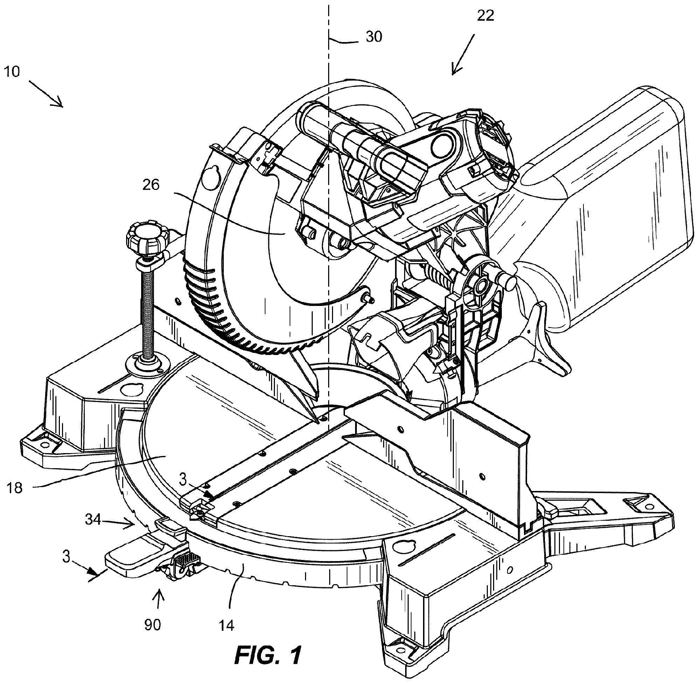

With reference to FIG. 1, a miter saw 10 in accordance with a first embodiment of the invention includes a base 14 and a table 18 upon which a workpiece is supported. The miter saw 10 also includes a saw unit 22, which includes a saw blade 26, for cutting the workpiece supported on the base 14 and table 18. The table 18 is rotatably supported on the base 14 for pivoting movement about a generally vertical miter axis 30. The saw unit 22 is pivotable about the miter axis 30 in unison with the table 18 to allow the saw blade 26 to perform various miter cuts on the workpiece.

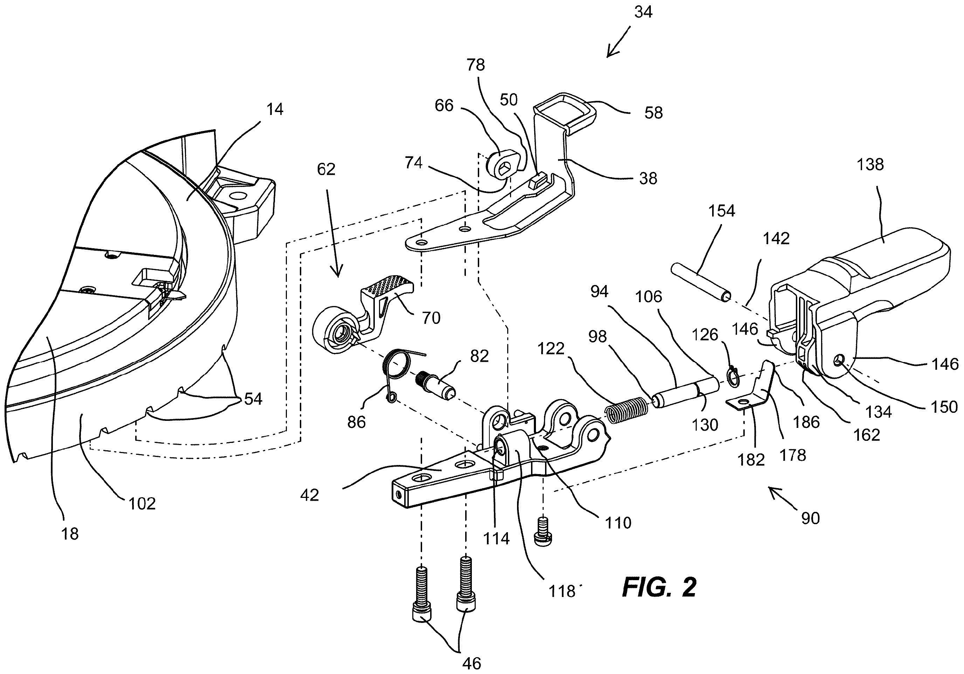

With reference to FIG. 2, the miter saw 10 further includes a miter angle adjustment system 34 for positioning the table 18 and the saw unit 22 in one of a plurality of predefined miter angle positions relative to the base 14. The miter angle adjustment system 34 includes a detent release lever 38 coupled to the table 18 by a bracket 42. In the illustrated embodiment of the miter saw 10, the bracket 42 and the detent release lever 38 are secured to the table 18 by fasteners 46 threaded to corresponding threaded bores (not shown) in the table 18. Alternatively, the detent release lever 38 may be secured to the table 18 separately from the bracket 42 in any of a number of different ways.

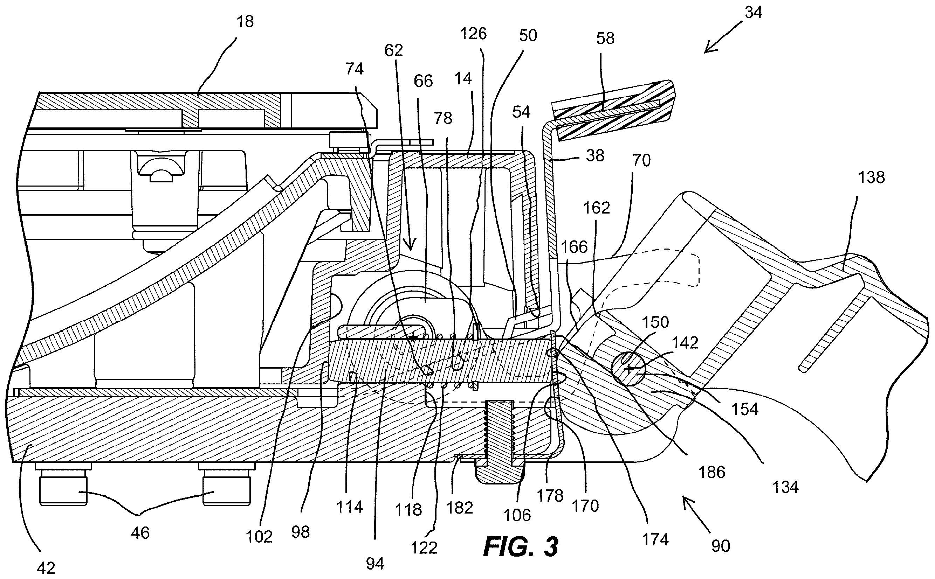

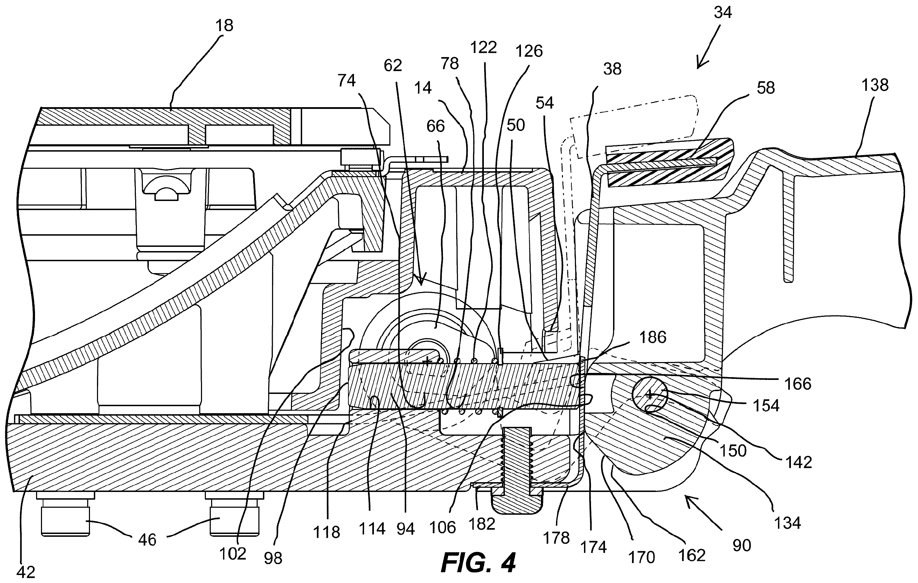

The miter angle adjustment system 34 also includes a detent 50 extending from the detent release lever 38 and a plurality of recesses 54 defined in the base 14 at the predefined miter angle positions in which the detent 50 is selectively receivable. In the illustrated embodiment of the miter saw 10, the detent release lever 38 is configured as a leaf spring with the detent 50 formed integrally therewith. Due to its leaf-spring configuration, the detent release lever 38 has inherent resiliency and is biased into a first, engaged position in which the detent 50 is received within one of the recesses 54 defined in the base 14 (FIG. 3). To remove the detent 50 from any of the recesses 54, a distal end 58 of the detent release lever 38 is manually depressible to deflect the detent release lever 38 into a second, disengaged position where the detent 50 is displaced from the base 14 and the detent 50 is not receivable in any of the recesses 54 (shown in phantom in FIG. 4). When the detent release lever 38 is in the disengaged position, the table 18 and saw unit 22 may be manually rotated about the miter axis 30 relative to the base 14 to another miter angle position. Alternatively, the detent release lever 38 may be configured as a substantially rigid structure biased by a suitable biasing member, such as a compression spring, toward the first position.

With reference to FIG. 2, the miter saw 10 also includes a detent bypass mechanism 62 for holding the detent release lever 38 in the disengaged position without requiring the user to continuously exert a force on the distal end 58 of the detent release lever 38 while adjusting the miter angle of the saw unit 22. The detent bypass mechanism 62 includes a detent bypass cam 66 that is engageable with the detent release lever 38 and a detent bypass lever 70 coupled for co-rotation with the detent bypass cam 66 for pivoting the cam 66 between a first position (FIG. 3), in which the detent release lever 38 is biased into the engaged position, and a second position (FIG. 4), in which the detent release lever 38 is deflected away from the base 14 and into the disengaged position to prevent the detent 50 from being received in any of the recesses 54 while adjusting the miter angle of the saw unit 22. In particular, the detent bypass cam 66 includes a substantially planar surface 74 that is engaged with the detent release lever 38 when in the first position shown in FIG. 3, and an arcuate transition surface 78 adjacent the planar surface 74 that is engaged with the detent release lever 38 when in the second position shown in FIG. 4. As described in more detail below, friction between the detent bypass cam 66 and the detent release lever 38, and in particular friction between the transition surface 78 and the detent release lever 38, maintains the detent bypass cam 66 in the second position shown in FIG. 4. Alternatively, a latch or some other form of quick-release structure may be used for holding the detent bypass cam 66 in the second position shown in FIG. 4.

In the illustrated embodiment of the detent bypass mechanism 62, the detent bypass cam 66 and the detent bypass lever 70 are coupled by a shaft 82 (FIG. 2) which, in turn, is rotatably supported by the bracket 42. Alternatively, the detent bypass cam 66 may be integrally formed with the detent bypass lever 38, with or without an intermediate shaft 82. The detent bypass mechanism 62 further includes a torsion spring 86 for biasing the detent bypass cam 66 toward the first position. Although the spring 86 is capable of exerting a torque on the detent bypass lever 38 and shaft 82 that is sufficiently high to assist return of the detent bypass cam 66 to the first position shown in FIG. 2, after the user has supplied an initial torque input to the detent bypass lever 66 sufficient to overcome the reaction torque on the detent bypass cam 66 caused by frictional contact with the detent release lever 38, the spring 86 alone is insufficient to return the detent bypass cam 66 from the second position (FIG. 4) to the first position (FIG. 3).

With continued reference to FIG. 2, the miter saw 10 further includes a miter angle lock 90 for enabling the user to lock the table 18 relative to the base 14 in substantially any miter angle position, including the predefined miter angle positions coinciding with the recesses 54. The miter angle lock 90 includes a locking pin 94 having a first end 98 adjacent and in facing relationship with a peripheral wall 102 of the base 14 and an opposite, second end 106. The pin 94 is supported for sliding movement along an axis 110 within a cylindrical bore 114 which, in turn, is defined within a boss 118 on the bracket 42. The miter angle lock 10 also includes a compression spring 122 surrounding the locking pin 94 and retained between the boss 118 and a retaining ring 126 received within an associated circumferential groove 130 proximate the second end 106 of the locking pin 94. As shown in FIG. 4, the compression spring 122 biases the first end 98 of the locking pin 94 away from the peripheral wall 102. Alternatively, the retaining ring 126 may be substituted by a flange integrally formed with the locking pin 94. Additionally, the compression spring 122 may be replaced with another suitable biasing member.

With reference to FIGS. 2-4, the miter angle lock 10 further includes a cam member 134 engageable with the second end 106 of the locking pin 94 and an actuator or handle 138 for pivoting the cam member 134 relative to the bracket 42 about a pivot axis 142. The handle 138 includes a pair of lobes 146 (FIG. 2), each of which includes an aperture 150 coaxial with the pivot axis 142 through which a pin 154 is inserted for pivotably coupling the handle 138 and cam member 134 to the bracket 42. The cam member 134 is positioned between the lobes 146, and is located closer to one lobe 146 than the other, but may alternatively be equidistant between both lobes 146. The cam member 134 also includes an aperture 158 coaxial with the pivot axis 142 through which the pin 154 is inserted. In the illustrated embodiment of the miter saw 10, the cam member 134 is integrally formed with the handle 138 as a single piece. Alternatively, the cam member 134 may be a separate component coupled to the handle 138 in any of a number of different ways.

With continued reference to FIG. 2, the cam member 134 includes a cam surface 162 engageable with the second end 106 of the locking pin 94. According to the invention, the cam surface 162 is defined by a first substantially planar surface 166, a second substantially planar surface 170, and a transition region 174 between the first and second substantially planar surfaces 166, 170 (FIGS. 3 and 4). As described in more detail below, the second substantially planar surface 170 is located farther from the pivot axis 142 than the first substantially planar surface 166, and the transition region 174 of the cam surface 162 is located farther from the pivot axis 142 than the second substantially planar surface 170. The cam member 134 is pivotable by the handle 138 between a locked position (FIG. 3), in which the first end 98 of the locking pin 94 is brought into frictional contact with the peripheral wall 102 for locking the table 18 relative to the base 14, and an unlocked position (FIG. 4), in which the first end 98 of the locking pin 94 is spaced from the peripheral wall 102. In the locked position shown in FIG. 3, the second substantially planar surface 170 of the cam member 134 is engaged with the second end 106 of the locking pin 94 to maintain the first end 98 of the locking pin 94 in frictional contact with the peripheral wall 102, against the bias of the compression spring 122. In the unlocked position shown in FIG. 4, the first substantially planar surface 166 of the cam member 134 is engaged with the second end 106 of the locking pin 94, thereby permitting the compression spring 122 to rebound and displace the first end 98 of the locking pin 94 away from the peripheral wall 102. In the illustrated embodiment of the miter saw 10, the miter angle lock 90 includes a wear plate 178 having a first end 182 fixed to the bracket 42 and a second, distal end 186 positioned between the cam member 134 and the second end 106 of the locking pin 94. Accordingly, the cam member 134 is engageable with the second end 106 of the locking pin 94 through the wear plate 178. Alternatively, the wear plate 178 may be omitted, and the cam member 134 may directly engage the second end 106 of the locking pin 94.

In operation of the miter saw 10 of FIGS. 1-4, when the miter angle lock 90 is unlocked, the miter angle adjustment system 34 may be used to locate the saw unit 22 in one of a plurality of predefined miter angle positions relative to the base 14. To reorient the saw unit 22 from one predefined miter angle position to another, a user of the miter saw 10 needs only to depress the detent release lever 38, thereby moving the detent release lever 38 to the disengaged position (shown in solid lines in FIG. 4) in which the detent 50 is removed from one of the recesses 54 in the base 14. The user may then reorient the table 18 and saw unit 22, by grasping the handle 138 and rotating the table 18 about the miter axis 30, to another predefined miter angle position and release the detent release lever 38. Due to the inherent resiliency of the detent release lever 38, it resumes its substantially undeformed shape when released, thereby assuming the engaged position (shown in phantom lines in FIG. 4) and inserting the detent 50 into another recess 54 in the base 14 associated with the newly selected miter angle position. Alternatively, the user may release the detent release lever 38 prior to reaching the newly selected miter angle position, and the detent release lever 38 will automatically assume its engaged position upon the detent 50 reaching the next recess 54 in the base 14 as the table 18 and saw unit 22 are rotated about the miter axis 30.

Optionally, in lieu of manually depressing the detent release lever 38, the detent bypass mechanism 62 may be used to maintain the detent release lever 38 in its disengaged position and prevent the detent 50 from being received within any of the recesses 54 while adjusting the miter angle of the saw unit 22. Specifically, from the biased position of the detent bypass cam 66 shown in FIG. 3, the user would depress the detent bypass lever 70 against the bias of the torsion spring 86, causing the detent bypass cam 66 to rotate in a clockwise direction from the frame of reference of FIG. 3. As the detent bypass cam 66 rotates, the detent release lever 38 is deflected downward toward its disengaged position (shown in solid lines in FIG. 4), thereby removing the detent 50 from one of the recesses 54 in the base 14. Frictional contact between the detent bypass cam 66 and the detent release lever 38, as described above, maintains the detent bypass cam 66 and lever 70 in the position shown in FIG. 4 and also the detent release lever 38 in the disengaged position. Thereafter, the miter angle of the saw unit 22 can be adjusted to another predefined miter angle associated with one of the recesses 54 in the base 14, or another miter angle between two adjacent recesses 54. If the newly selected miter angle coincides with one of the recesses 54, the user may return the detent release lever 38 to its engaged position by applying an initial torque input to the detent bypass lever 70 in a direction counter to the reaction torque applied to the detent bypass cam 66 by frictional contact with the detent release lever.

To secure the table 18 to the base 14 in a more positive manner, the user may engage the miter angle lock 90 by pivoting the handle 138 about the pivot axis 142 clockwise from the frame of reference of FIG. 4, to the position shown in FIG. 3. As the handle 138 is pivoted, the cam member 134 is also pivoted from the unlocked position in FIG. 4 in which the first substantially planar surface 166 is engaged with the wear plate 178, to the locked position in FIG. 3 in which the second substantially planar surface 170 is engaged with the wear plate 178. As contact between the cam surface 162 and the wear plate 178 transitions from the first substantially planar surface 166 to the transition region 174, the wear plate 178 deflects and displaces the locking pin 94, against the bias of the spring 122, toward the peripheral wall 102 of the base 14 until the first end 98 of the locking pin 94 contacts the peripheral wall 102 of the base 14. As pivoting of the handle 138 and cam member 134 in a clockwise direction continues, contact between the cam surface 162 and the wear plate 178 transitions from the transition region 174 to the second substantially planar surface 170. Because the transition region 174 is located farther from pivot axis 142 than the second substantially planar surface 170, the transition region 174 of the cam surface 162 effectively functions as an over center latch, providing a tactile indication to the user that the miter angle lock 90 is engaged. When the cam member 134 is pivoted to the locked position shown in FIG. 3, the locking pin 94 is displaced a sufficient amount to apply a sufficiently high clamping force against the peripheral wall 102. Consequently, should the user inadvertently bump the table 18 during use of the miter saw 10 when the miter angle lock 90 is engaged, a sufficiently high frictional force may be developed between the first end 98 of the pin 94 and the peripheral wall 102 to inhibit rotation of the table 18 relative to the base 14.

To disengage the miter angle lock 10, the user needs only to lift or pivot the handle 138 in a counter-clockwise direction from the frame of reference of FIG. 3, to the position shown in FIG. 4. As the handle 138 is pivoted, the cam member 134 is also pivoted from the locked position in FIG. 3 to the unlocked position in FIG. 4, permitting the wear plate 178 to resume its undeformed shape and the first end 98 of the locking pin 94 to be displaced away from the peripheral wall 102 as the spring 122 rebounds.

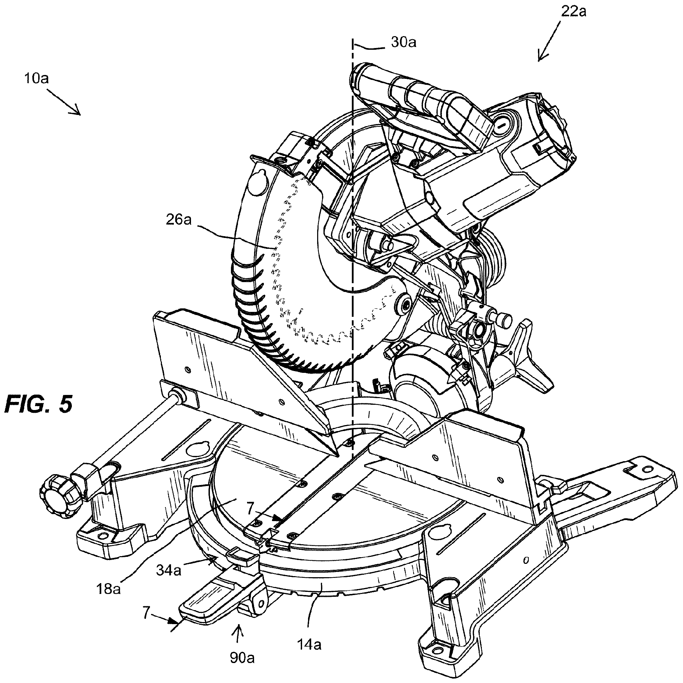

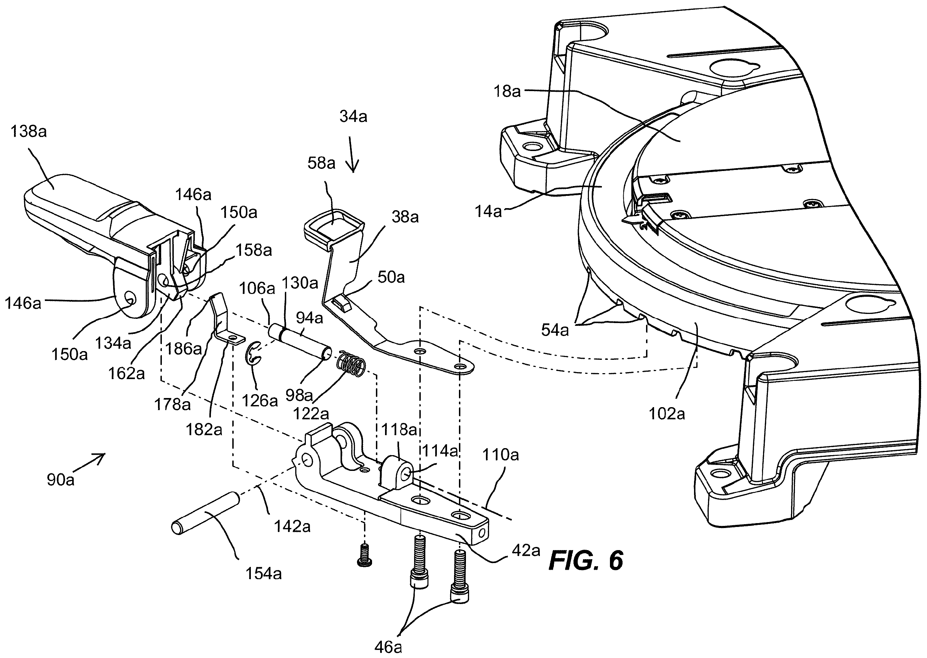

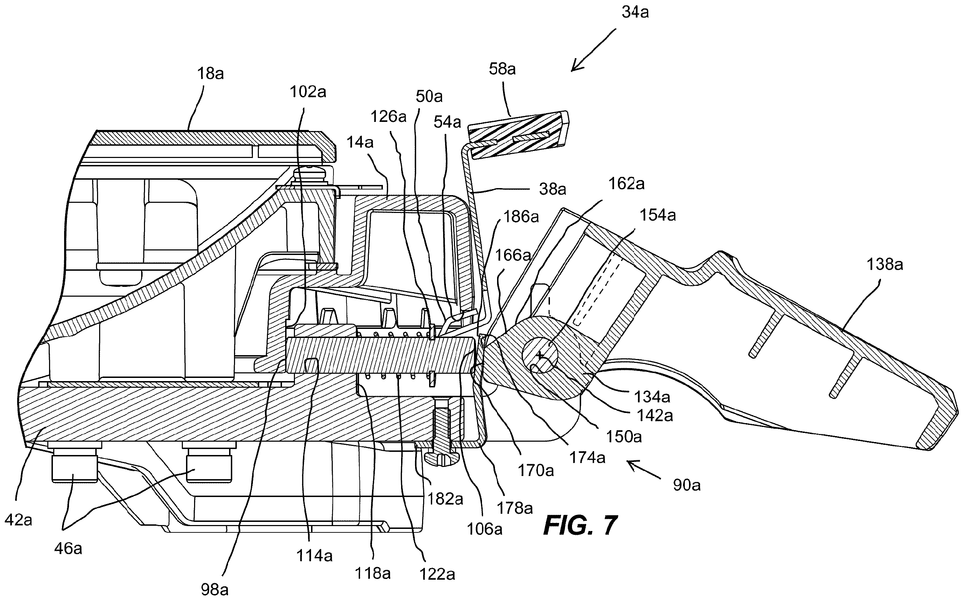

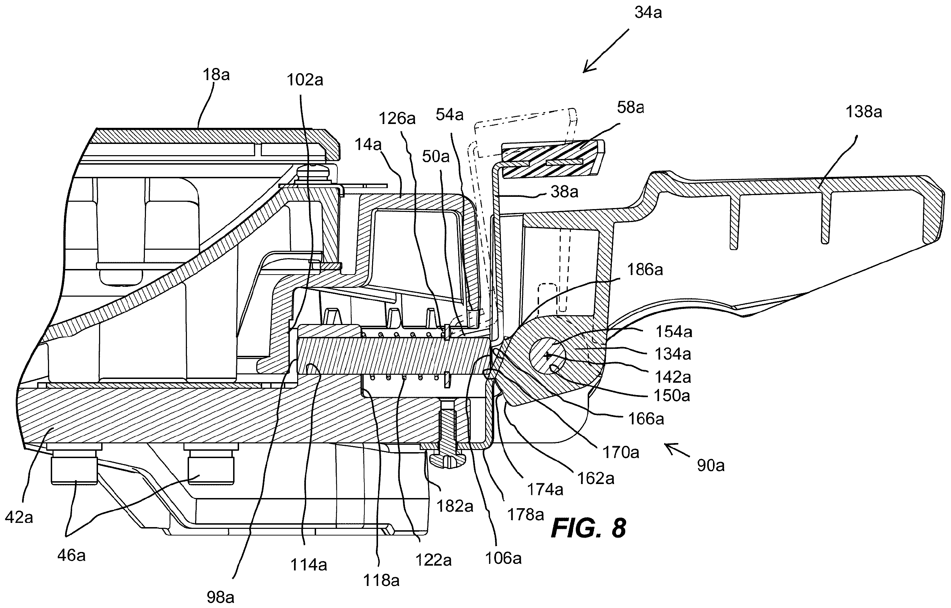

FIGS. 5-8 illustrate a miter saw 10a in accordance with another embodiment of the invention. Like components and features are identified with like reference numerals plus the letter "a" and will not be described again in detail. With the exception of some minor distinctions in shape of some of the components, the miter angle adjustment assembly 34a and the miter angle lock 90a of the miter saw 10a of FIGS. 5-8 are substantially identical to those features in the miter saw 10 of FIGS. 1-4. The miter saw 10a of FIGS. 5-8, however, does not include a detent bypass mechanism like the miter saw 10 of FIGS. 1-4. The manner of operation of the miter saw 10a of FIGS. 5-8, with the exception of use of a detent bypass mechanism, is otherwise identical to that described above in connection with the miter saw 10 of FIGS. 1-4.

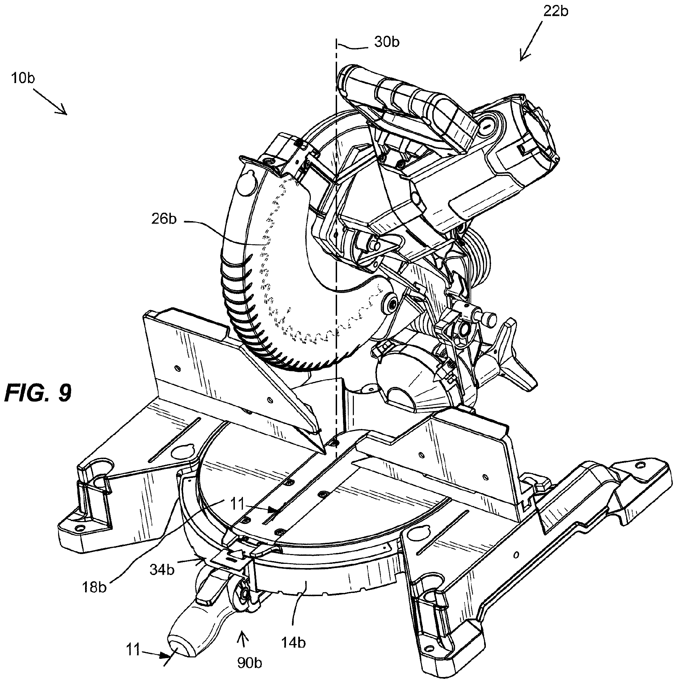

FIGS. 9-12 illustrate a miter saw 10b in accordance with an example not according to the invention. Like components and features are identified with like reference numerals plus the letter "b" and will not be described again in detail. With the exception of some minor distinctions in shape of some of the components, the miter angle adjustment assembly 34b of the miter saw 10b of FIGS. 9-12 is substantially identical to the miter angle adjustment assembly of the miter saw of FIGS. 1-4. The miter saw 10b of FIGS. 9-12, however, does not include a detent bypass mechanism 62 like the miter saw 10 of FIGS. 1-4. Therefore, only the differences will be described in detail.

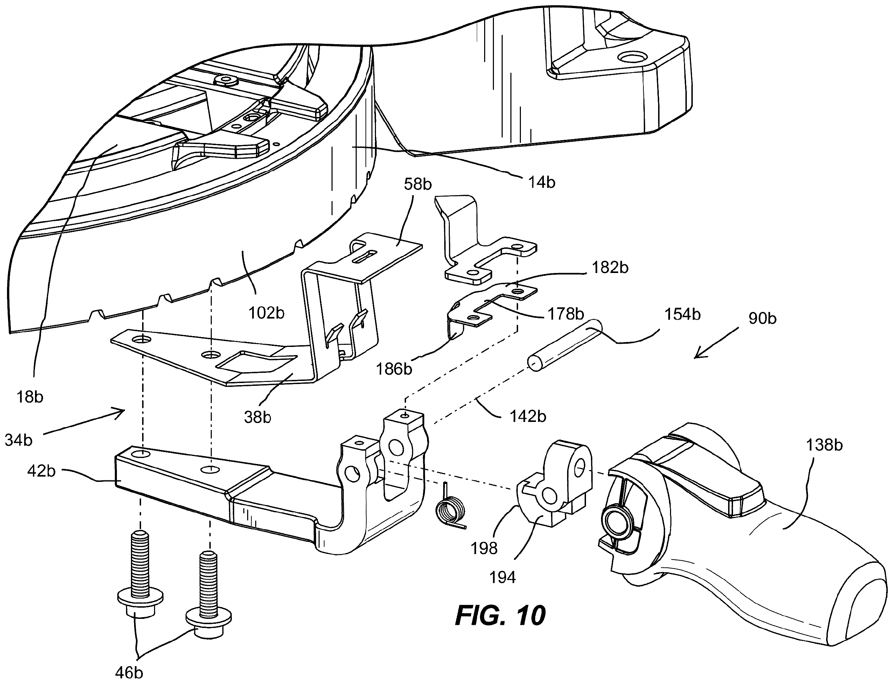

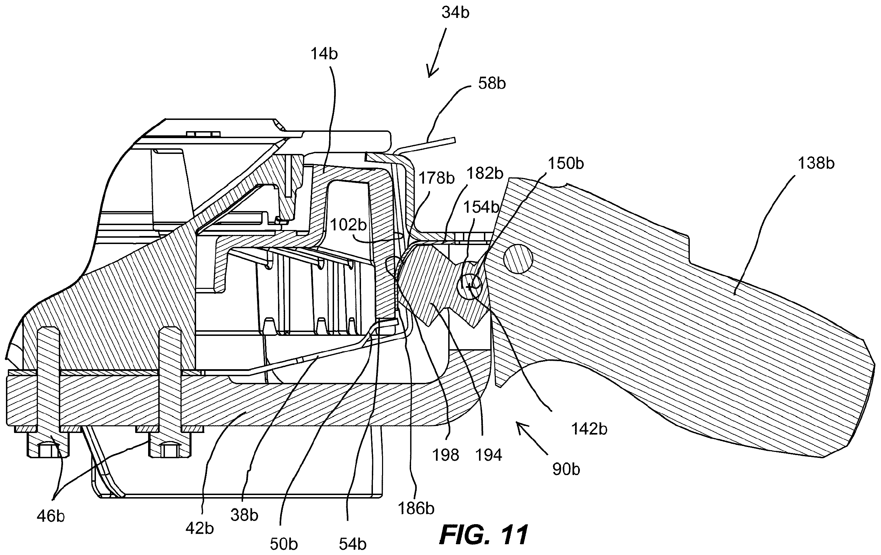

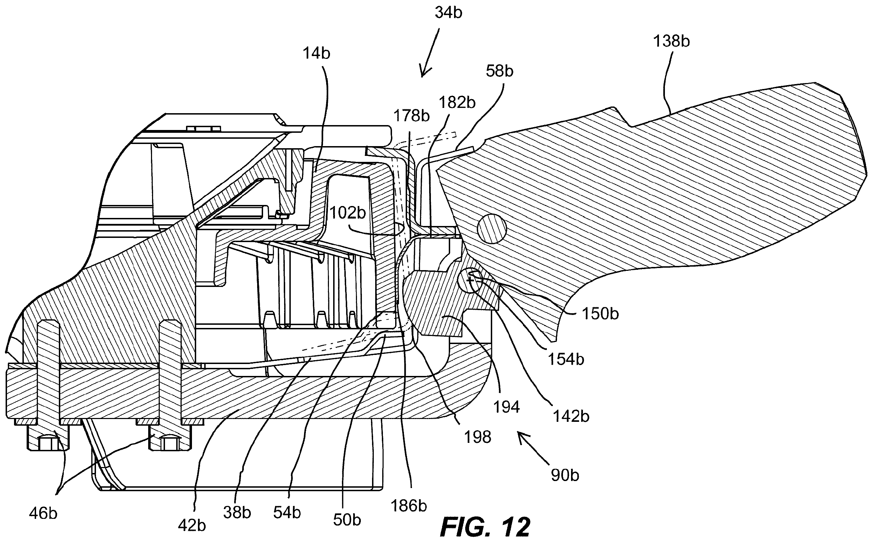

With reference to FIGS. 10-12, the miter angle lock 90b includes a cam member 194 that is coupled to the handle 138b for co-rotation about the pivot axis 142b. Although the cam member 194 and the handle 138b are separate components in the illustrated embodiment of the miter angle lock 90b, the cam member 194 and handle 138b may be integrally formed as one piece. Unlike the cam member 134 shown in FIGS. 3 and 4, the cam member 194 shown in FIGS. 11 and 12 includes an arcuate cam surface 198 that gradually increases in radial distance from the pivot axis 142b in a counter-clockwise direction about the pivot axis 142b from the frame of reference of FIG. 12. The cam member 194 is pivotable in unison with the handle 138b between a locked position (FIG. 11), in which the cam surface 198 of the cam member 194 is brought into engagement with the peripheral wall 102b for locking the table 18b relative to the base 14b, and an unlocked position (FIG. 12), in which the cam surface 198 is spaced from the peripheral wall 102b. In the illustrated embodiment of the miter angle lock 90b, the distal end 186b of the wear plate 178b is positioned between the cam surface 198 of the cam member 194 and the peripheral wall 102b. Accordingly, the cam member 194 is engageable with the peripheral wall 102b, when in the locked position, through the wear plate 178b. Alternatively, the wear plate 178b may be omitted, and the cam member 194 may directly engage the peripheral wall 102b.

In operation of the miter saw 10b of FIGS. 9-12, to lock the table18b relative to the base 14b the user may pivot the handle 138b about the pivot axis 142b in a clockwise direction from the frame of reference of FIG. 12 toward the position shown in FIG. 11. As the handle 138b is pivoted, the cam member 194b is also pivoted from the unlocked position in FIG. 12, in which the cam surface 198 is spaced from the wear plate 178b and the peripheral wall 102b, toward the locked position in FIG. 11 in which the cam surface 198 presses the wear plate 178b against the peripheral wall 102b. Because the cam surface 198 increases in radially distance from the pivot axis 142b as described above, as the cam member 194 is pivoted toward the locked position, the clamping force applied to the peripheral wall 102b by the cam member 194 is gradually and continuously increased. Upon the cam member 194 reaching the locked position shown in FIG. 11, the clamping force applied to the peripheral wall 102b reaches a maximum value, thereby permitting the wear plate 178b to develop a sufficiently high frictional force on the peripheral wall 102b to inhibit rotation of t1he table 18b relative to the base 14b.

To disengage the miter angle lock 90b, the user needs only to lift or pivot the handle 138b in a counter-clockwise direction about the pivot axis 142b from the frame of reference of FIG. 11 toward the position shown in FIG. 12. As the handle 138b is pivoted, the cam member 194 is also pivoted from the locked position in FIG. 11 toward the unlocked position in FIG. 12, in which the cam surface 198 is spaced from the wear plate 178b and the peripheral wall 102b. As the cam member 194b is pivoted from the locked position toward the unlocked position, the clamping force applied to the peripheral wall 102b is gradually and continuously decreased until spacing is reestablished between the cam surface 198 and the wear plate 178b.

Various features of the invention are set forth in the following claims.

## Claims

1. A miter saw (10) comprising:
a base (14) having a peripheral wall (102);
a table (18) rotatably supported upon the base (14); and
a miter angle lock (90) including
a pin (94) having a first end (98) adjacent the peripheral wall (102) and an opposite second end (106), and
a cam member (134) engageable with the second end (106) of the pin (94) and movable between a locked position in which the first end (98) of the pin (94) is brought into frictional contact with the peripheral wall (102) for locking the table (18) relative to the base (14), and an unlocked position in which the first end (98) of the pin (94) is spaced from the peripheral wall (102) of the base (14); and
an actuator (138) for moving the cam member (134) between the locked position and the unlocked position, wherein the actuator (138) is pivotable about a pivot axis (142) in unison with the cam member (134);
wherein the cam member (134) includes a cam surface (162) engageable with the second end (106) of the pin (94), wherein the cam surface (162) and the actuator (138) are positioned on opposite sides of the pivot axis (142); **characterized in that** the cam surface (162) is defined by a first substantially planar surface (166), a second substantially planar surface (170), and a transition region (174) between the first and second substantially planar surfaces (166, 170).

2. The miter saw (10) of claim 1, wherein the miter angle lock (90) further includes a biasing member (122) for biasing the first end (98) of the pin (94) away from the peripheral wall (102) when the cam member (134) is in the unlocked position.

3. The miter saw (10) of claim 1, wherein the second end (106) of the pin (94) is proximate the first substantially planar surface (166) when the cam member (134) is in the unlocked position, and wherein the second end (106) of the pin (94) is proximate the second substantially planar surface (170) when the cam member is in the locked position, and wherein optionally the transition region (174) of the cam surface (162) is located farther from the pivot axis (142) than the second substantially planar surface (170).

4. The miter saw (10) of any preceding claim, further comprising a bracket (42) coupling the table (18) and the miter angle lock (90), wherein the cam member (134) and actuator (138) are pivotably coupled to the bracket (42) about the pivot axis (142), wherein optionally the bracket includes a housing having a cylindrical bore (114) in which the pin is slidably received, and wherein the miter angle lock (90) further includes a retainer (126) coupled to the pin (94) and a compression spring (122) positioned between the housing and the retainer (126) for biasing the first end (98) of the pin (94) away from the peripheral wall (102) of the base (14).

5. The miter saw (10) of any preceding claim, wherein the miter angle lock (90) further includes a wear plate (178) having a first end (182) fixed to the bracket (42) and a second, distal end (186) positioned between the cam member (134) and the second end (106) of the pin (94).

6. The miter saw (10) of any preceding claim, wherein the actuator includes a pair of lobes (146), each having an aperture (150) coaxial with the pivot axis (142), and wherein the cam member (134) is positioned between the lobes (146), and wherein optionally the cam member (134) includes an aperture (158) coaxial with the pivot axis (142).

7. The miter saw (10) of any preceding claim, further comprising a miter angle adjustment system (34) including
a detent release lever (38);
a detent (50) extending from the detent release lever (38); and
a plurality of recesses (54) defined in the base (14) coinciding with predetermined miter angle positions of the table (18) relative to the base (14).

8. The miter saw (10) of claim 7, wherein the detent release lever (38) defines an aperture through which the cam member (134) protrudes to engage the peripheral wall (102) when in the locked position.

9. The miter saw (10) of claim 7 or 8, wherein the detent release lever (38) is adjustable between a first position in which the detent (50) is received in one of the plurality of recesses (54), and a second position in which the detent (50) is not received in any of the recesses (54); wherein optionally the detent release lever (38) is biased toward the first position.

10. The miter saw (10) of any one of claims 7 to 9, wherein the detent release lever (38) is operable to be manually actuated into the second position.

11. The miter saw (10) of claim 10, wherein the table (18) is freely rotatable relative to the base (14) when the detent release lever (38) is held in the second position and when the cam member (134) is in the unlocked position.

12. The miter saw (10) of any one of claims 7 to 11, wherein the detent release lever (38) is configured as a leaf spring.

## Patentansprüche

1. Gehrungssäge (10), die umfasst:
einen Sockel (14) mit einer Umfangswand (102); einen auf dem Sockel (14) drehbar gelagerten Tisch (18); und eine Gehrungswinkelverriegelung (90), die aufweist
einen Stift (94) mit einem an der Umfangswand (102) angrenzenden ersten Ende (98) und einem gegenüberliegenden zweiten Ende (106), und
ein Nockenelement (134), das mit dem zweiten Ende (106) des Stifts (94) einrastbar und zwischen einer verriegelten Stellung, in der das erste Ende (98) des Stifts (94) in Reibkontakt mit der Umfangswand (102) zum Verriegeln des Tisches (18) bezogen auf den Sockel (14) gebracht wird, und einer entriegelten Stellung beweglich ist, in der das erste Ende (98) des Stifts (94) mit Abstand zu der Umfangswand (102) des Sockels (14) angeordnet ist; und
ein Betätigungselement (138) zum Bewegen des Nockenelements (134) zwischen der verriegelten Stellung und der entriegelten Stellung, wobei das Betätigungselement (138) gemeinsam mit dem Nockenelement (134) um eine Drehachse (142) drehbar gelagert wird;
wobei das Nockenelement (134) eine mit dem zweiten Ende (106) des Stifts (94) einrastbare Nockenlauffläche (162) aufweist, wobei die Nockenlauffläche (162) und das Betätigungselement (138) auf gegenüberliegenden Seiten der Drehachse (142) positioniert sind; **dadurch gekennzeichnet, dass**
die Nockenlauffläche (162) durch eine erste im Wesentlichen ebene Oberfläche (166), eine zweite im Wesentlichen ebene Oberfläche (170) und einen Übergangsbereich (174) zwischen der ersten und zweiten im Wesentlichen ebenen Oberfläche (166, 170) definiert wird.

2. Gehrungssäge (10) nach Anspruch 1, wobei die Gehrungswinkelverriegelung (90) des Weiteren ein Vorspannelement (122) zum Vorspannen des ersten Endes (98) des Stifts (94) weg von der Umfangswand (102) aufweist, wenn das Nockenelement (134) in der entriegelten Stellung ist.

3. Gehrungssäge (10) nach Anspruch 1, wobei sich das zweite Ende (106) des Stifts (94) nahe der ersten im Wesentlichen ebenen Oberfläche (166) befindet, wenn das Nockenelement (134) in der entriegelten Stellung ist, und wobei das zweite Ende (106) des Stifts (94) sich nahe der zweiten im Wesentlichen ebenen Oberfläche (170) befindet, wenn das Nockenelement in der verriegelten Stellung ist, und
wobei wahlweise der Übergangsbereich (174) der Nockenlauffläche (162) weiter von der Drehachse (142) entfernt angeordnet ist, als die zweite im Wesentlichen ebene Oberfläche (170).

4. Gehrungssäge (10) nach einem vorhergehenden Anspruch, die des Weiteren eine Halterung (42) umfasst, die den Tisch (18) und die Gehrungswinkelverriegelung (90) verbindet, wobei das Nockenelement (134) und Betätigungselement (138) mit der Halterung (42) um die Drehachse (142) schwenkbar verbunden sind, wobei wahlweise die Halterung ein Gehäuse mit einer zylindrischen Bohrung (114) aufweist, in der der Stift verschiebbar aufgenommen wird, und wobei die Gehrungswinkelverriegelung (90) des Weiteren einen mit dem Stift (94) verbundenen Halter (126) und eine zwischen dem Gehäuse und dem Halter (126) zum Vorspannen des ersten Endes (98) des Stifts (94) weg von der Umfangswand (102) des Sockels (14) positionierte Druckfeder (122) aufweist.

5. Gehrungssäge (10) nach einem vorhergehenden Anspruch, wobei die Gehrungswinkelverriegelung (90) des Weiteren eine Verschleißplatte (178) mit einem ersten Ende (182), das an der Halterung (42) befestigt wird, und einem zweiten, distalen Ende (186) aufweist, das zwischen dem Nockenelement (134) und dem zweiten Ende (106) des Stifts (94) positioniert wird.

6. Gehrungssäge (10) nach einem vorhergehenden Anspruch, wobei das Betätigungselement ein Paar lappenförmige Teile (146) aufweist, wobei jedes eine Öffnung (150) koaxial mit der Drehachse (142) aufweist, und wobei das Nockenelement (134) zwischen den lappenförmigen Teilen (146) positioniert wird, und wobei wahlweise das Nockenelement (134) eine mit der Drehachse (142) koaxiale Öffnung (158) aufweist.

7. Gehrungssäge (10) nach einem vorhergehenden Anspruch, die des Weiteren ein Gehrungswinkel-Einstellsystem (34) umfasst, das aufweist
einen Ausrasthebel (38);
eine Raste (50), die sich von dem Ausrasthebel (38) erstreckt; und
eine Vielzahl von Aussparungen (54), die in dem Sockel (14) definiert werden, die mit vorbestimmten Gehrungswinkelstellungen des Tisches (18) bezogen auf den Sockel (14) zusammenfallen.

8. Gehrungssäge (10) nach Anspruch 7, wobei der Ausrasthebel (38) eine Öffnung definiert, durch die das Nockenelement (134) herausragt, um mit der Umfangswand (102) in der verriegelten Stellung einzurasten.

9. Gehrungssäge (10) nach Anspruch 7 oder 8, wobei der Ausrasthebel (38) zwischen einer ersten Stellung, in der die Raste (50) in einer der Vielzahl von Aussparungen (54) aufgenommen wird, und einer zweiten Stellung, in der die Raste (50) in keiner der Aussparungen (54) aufgenommen wird, einstellbar ist; wobei der Ausrasthebel (38) wahlweise in Richtung der ersten Stellung vorgespannt wird.

10. Gehrungssäge (10) nach einem der Ansprüche 7 bis 9, wobei der Ausrasthebel (38) bedienbar ist, um manuell in die zweite Stellung betätigt zu werden.

11. Gehrungssäge (10) nach Anspruch 10, wobei der Tisch (18) bezogen auf den Sockel (14) frei drehbar ist, wenn der Ausrasthebel (38) in der zweiten Stellung gehalten wird und wenn das Nockenelement (134) in der entriegelten Stellung ist.

12. Gehrungssäge (10) nach einem der Ansprüche 7 bis 11, wobei der Ausrasthebel (38) als eine Blattfeder konfiguriert ist.

## Revendications

1. Scie à onglet (10) comprenant :
une base (14) présentant une paroi périphérique (102) ;
une table (18) supportée rotative sur la base (14) ; et
un verrou d'angle d'onglet (90) comprenant
une cheville (94) présentant une première extrémité (98) adjacente à la paroi périphérique (102) et une deuxième extrémité (106) opposée, et
un élément formant came (134) pouvant venir en prise avec la deuxième extrémité (106) de la cheville (94) et mobile entre une position verrouillée dans laquelle la première extrémité (98) de la cheville (94) est mise en contact de frottement avec la paroi périphérique (102) afin de verrouiller la table (18) par rapport à la base (14), et une position déverrouillée dans laquelle la première extrémité (98) de la cheville (94) est espacée par rapport à la paroi périphérique (102) de la base (14) ; et
un actionneur (138) permettant de déplacer l'élément formant came (134) entre la position verrouillée et la position déverrouillée, l'actionneur (138) pouvant pivoter autour d'un axe de pivotement (142) à l'unisson de l'élément formant came (134) ;
dans laquelle l'élément formant came (134) comprend une surface de came (162) pouvant venir en prise avec la deuxième extrémité (106) de la cheville (94), dans laquelle la surface de came (162) et l'actionneur (138) sont positionnés sur des côtés opposés de l'axe de pivotement (142) ; **caractérisée en ce que**
la surface de came (162) est définie par une première surface essentiellement plane (166), une deuxième surface essentiellement plane (170), et une région de transition (174) située entre les première et deuxième surfaces essentiellement planes (166, 170).

2. Scie à onglet (10) selon la revendication 1, dans laquelle le verrou d'angle d'onglet (90) comprend en outre un élément de sollicitation (122) permettant d'éloigner la première extrémité (98) de la cheville (94) par rapport à la paroi périphérique (102) lorsque l'élément formant came (134) se trouve dans la position déverrouillée.

3. Scie à onglet (10) selon la revendication 1, dans laquelle la deuxième extrémité (106) de la cheville (94) est proche de la première surface essentiellement plane (166) lorsque l'élément formant came (134) se trouve dans la position déverrouillée, et dans laquelle la deuxième extrémité (106) de la cheville (94) est proche de la deuxième surface essentiellement plane (170) lorsque l'élément formant came se trouve dans la position verrouillée, et
dans laquelle éventuellement la région de transition (174) de la surface de came (162) est située plus loin de l'axe de pivotement (142) que de la deuxième surface essentiellement plane (170).

4. Scie à onglet (10) selon l'une quelconque des revendications précédentes, comprenant en outre un support (42) couplant la table (18) et le verrou d'angle d'onglet (90), dans laquelle l'élément formant came (134) et l'actionneur (138) sont couplés pivotants par rapport au support (42) autour de l'axe de pivotement (142), dans laquelle éventuellement le support comprend un logement présentant un alésage cylindrique (114) au sein duquel la cheville est accueillie coulissante, et dans laquelle le verrou d'angle d'onglet (90) comprend en outre un dispositif de retenue (126) couplé à la cheville (94) et un ressort de compression (122) positionné entre le logement et le dispositif de retenue (126) afin d'éloigner la première extrémité (98) de la cheville (94) par rapport à la paroi périphérique (102) de la base (14).

5. Scie à onglet (10) selon l'une quelconque des revendications précédentes, dans laquelle le verrou d'angle d'onglet (90) comprend en outre une plaque d'usure (178) présentant une première extrémité (182) fixée au support (42) et une deuxième extrémité distale (186) positionnée entre l'élément formant came (134) et la deuxième extrémité (106) de la cheville (94).

6. Scie à onglet (10) selon l'une quelconque des revendications précédentes, dans laquelle l'actionneur comprend une paire de lobes (146), présentant respectivement une ouverture (150) coaxiale par rapport à l'axe de pivotement (142), et dans laquelle l'élément formant came (134) est positionné entre les lobes (146), et dans laquelle éventuellement l'élément formant came (134) comprend une ouverture (158) coaxiale par rapport à l'axe de pivotement (142).

7. Scie à onglet (10) selon l'une quelconque des revendications précédentes, comprenant en outre un système d'ajustement d'angle d'onglet (34) comprenant
un levier de libération d'ergot (38) ;
un ergot (50) s'étendant à partir du levier de libération d'ergot (38) ; et
une pluralité de renfoncements (54) définis dans la base (14) et coïncidant avec des positions d'angle d'onglet prédéterminées de la table (18) par rapport à la base (14).

8. Scie à onglet (10) selon la revendication 7, dans laquelle le levier de libération d'ergot (38) définit une ouverture à travers laquelle l'élément formant came (134) fait saillie pour venir en prise avec la paroi périphérique (102) dans la position verrouillée.

9. Scie à onglet (10) selon la revendication 7 ou 8, dans laquelle le levier de libération d'ergot (38) peut être ajusté entre une première position dans laquelle l'ergot (50) est accueilli dans un parmi la pluralité de renfoncements (54), et une deuxième position dans laquelle l'ergot (50) n'est pas accueilli dans l'un quelconque des renfoncements (54) ; dans laquelle éventuellement le levier de libération d'ergot (38) est sollicité en direction de la première position.

10. Scie à onglet (10) selon l'une quelconque des revendications 7 à 9, dans laquelle le levier de libération d'ergot (38) peut servir à être actionné manuellement pour venir dans la deuxième position.

11. Scie à onglet (10) selon la revendication 10, dans laquelle la table (18) peut tourner librement par rapport à la base (14) lorsque le levier de libération d'ergot (38) est maintenu dans la deuxième position et lorsque l'élément formant came (134) se trouve dans la position déverrouillée.

12. Scie à onglet (10) selon l'une quelconque des revendications 7 à 11, dans laquelle le levier de libération d'ergot (38) est configuré sous forme de ressort à lames.
